# EUROPEAN PATENT APPLICATION

(11) **EP 2 368 465 A1**
(43) Date of publication of application: **28.09.2011**
(21) Application number: 10157681.7
(22) Date of filing: 25.03.2010
(51) Int. Cl.: A47J 19/02

(54) **Centrifuge-type juice extractor having a frusto-conical sieve and enhanced juice separation**

(71) Applicant: Koninklijke Philips Electronics N.V., 5621 BA Eindhoven (NL)
(72) Inventor: Holzbauer, Juergen, 5600 AE, Eindhoven (NL); Obersteiner, Heimo, 5600 AE, Eindhoven (NL)
(74) Representative: Damen, Daniel Martijn

(57) **Abstract**

A food processor (200) comprising a grating disk (108) arranged to grate food into juice and pulp, said grating disk being arranged to be rotated during use. Food is fed to the grating disk (108) by means of a feeding tube (202) arranged to feed food in a feeding direction (112). During use, the food exits the feeding tube (202) at an exit end (105). Further, the feeding tube (202) comprising a feeding tube wall (106). The food processor (200) has a sieve (111) arranged to separate said pulp and juice, wherein said sieve (111) is of a frusto-conical form extending in diameter along said feeding direction (112) from a top end (113) to a bottom end (114), such that the top end (113) has a smaller diameter than the bottom end (114). The sieve (111) is arranged to be rotated during use, and surrounds both the grating disk (108) and the feeding tube (202) exit end (105). During use, said juice is transported to the outside of the sieve (111). The feeding tube wall (106) is shaped to prevent, during use, juice from re-entering the sieve (111) at the top end (113) of the sieve (111).

## Description

### FIELD OF THE INVENTION

The invention relates to a food processor comprising a grating disk arranged to grate food into juice and pulp, said grating disk being arranged to be rotated during use, a feeding tube arranged to feed food to said grating disk in a feeding direction, wherein said food exits the feeding tube at an exit end, and said feeding tube comprising a feeding tube wall, a sieve arranged to separate said pulp and juice, wherein said sieve is of a frusto-conical form extending in diameter along said feeding direction from a top end to a bottom end, such that the top end has a smaller diameter than the bottom end, wherein said sieve is arranged to be rotated during use, and wherein said sieve surrounds the grating disk and the feeding tube exit end, and wherein, during use, said juice is transported to the outside of the sieve.

### BACKGROUND OF THE INVENTION

Devices for grating food in order to produce separate fractions of juice and pulp by using a sieve are known from the art. For example US patent 4034664 discloses a juice extractor of the centrifuge type for extracting, by pulverization and filtering under centrifugal force, the juice component from plant materials such as fruit or vegetables. The fruit or vegetable is introduced through a hopper and pulverized upon contact with rivets on a plate member which rapidly rotates at the bottom of the hopper member or feeding tube. The pulverized material is thrown outwardly under centrifugal force towards a surrounding frusto-conical filter element. The pulp material migrates downwardly under the influence of gravity and centrifugal forces towards the base of the filter. The juice passes the filter and is captured within the surrounding enclosure. The juice can circulate freely in this enclosure. As is well known from fluid dynamics, the juice will circulate in the enclosure and will tend to swirl upwards against the enclosure wall. The device of US 4034664 discloses a gap between the top rim of the filter and the hopper.

It is a problem of the device of US 4034664 that juice can re-enter the area enclosed by the filter. This juice might not pass the filter again and end up in the pulp collecting area. Thereby, precious juice is wasted and the juice yield of the device reduced.

### SUMMARY OF THE INVENTION

It is an object of the invention to provide an efficient juicer, i.e. a juicer with a high juice yield.

The object of the invention is realized by the food processor as defined in claim 1. Particularly, the food processor according to the invention has a feeding tube wall shaped to prevent, during use, juice from re-entering the sieve at the top end of the sieve.

The inventors realized that the problem associated with the known juicers of the type of the preamble of claim 1 was in the area where the sieve top end surrounds the feeding tube wall and not, as previously thought, in the design of the housing of the food processor. Following this realization, no design constraints are set on the housing of the food processor in relation to juicing efficiency. During use of the food processor, the user feeds food to be juiced to the grating disk through the feeding tube. At the feeding tube end, the food will exit the feeding tube and get in contact with the grating disk. During use, the grating disk will rotate at high rotational speed of e.g. 6 000 to 10 000 revolutions per minute. Other rotational speeds are possible as well. The grating disk can be of any suitable design, e.g. like the design as disclosed in the European patent application having file number 09179640.9. It should be noted that the shape of the grating disk is not essential to the current invention and that other designs as known in the art are feasible as well. Upon contact with the grating disk the food will be grated. This grating will release juice from the food as well as pulp the food. The rotation of the shredding disk will exert centrifugal forces to the juice and pulp causing the juice and pulp to migrate to the edge of the disk and against the sieve surrounding the disk. This sieve rotates similar to the grating disk, usually in the same or a similar direction as the grating disk. However, this is not necessarily the case. Further, the speed of the sieve is usually similar to that of the grating disk. However, again, this is not necessarily the case. The invention applies to juicers having a frusto-conical sieve wherein the diameter of the sieve increases along the feeding direction of the food through the feeding tube. In other words, the sieve is narrower at the top than at the bottom, or, in further different wording, is increasing in diameter in the feeding direction. It is to be noted that the sieve can be regarded as a filter, filtering the juice from the pulp. The sieve is equipped with holes, e.g. holes similar to those disclosed in European patent application having file number 09180791.7. It should be noted that the shape of the sieve holes is not essential to the current invention and other kind of sieve-hole shapes known to the person skilled in the art of sieving can be used as well. Under the influence of the centrifugal and gravity forces the juice passes through the sieve while the pulp will migrate to the bottom end of the sieve while not passing the sieve. After passing the sieve, the juice might start to swirl and at least partly reach the area of the housing where the housing meets the feeding tube wall. This is dependent on the configuration and design of the housing and e.g. the amount of juice released during use. It should be noted that juicing different types and amounts of food will produce different amounts of juice. As the person skilled in the art of fluid dynamics will appreciate, the flow pattern of the juice will also depend on the amount of juice. Assuming that the design of the housing and the amount of juice produced are such that the juice reaches this area of the housing where the housing meets the feeding tube wall, juice will start travelling under the influence of gravity along the feeding tube wall to the feeding tube end. Due to the shape of the feeding tube wall this downward traveling juice is prevented from getting lost by re-entering the sieve, thereby increasing juicer efficiency. As the shape of the feeding tube is responsible for this beneficial effect independent of the design or configuration of other parts of the housing, the housing can be designed free of constraints from a juicer efficiency point of view, allowing the designer to chose a design best suiting current and expected market demands, or a design minimizing manufacturing costs and/or material usage.

When looking at the problem of the device of US 4034664 from a design perspective, a design specialist might conclude that the device of US 4034664 has to meet specific constraints on the configuration of the enclosure to control juice flow during juicing, e.g. to prevent the juice from re-entering the sieve through the gap between the top rim of the filter and the hopper or feeding tube. Such a re-entry reduces the efficiency of the juicer and leads to loss of precious juice. From an easy-to-clean perspective which is important for many users, smooth, rounded, dome-like shapes are preferred for the enclosure. Such shapes are also found to be more attractive to the eye by some users. However, such shapes lead to increased swiveling of the juice whereby the juice reaches more areas of the enclosure. In some cases the juice might even reach the area where the top rim of the sieve surrounds the hopper and juice might re-enter the filter area.

From the design perspective, it is a problem of juicers like the ones disclosed in US 4034664 that easy-to-clean enclosure configurations lead to a reduction in juicer efficiency, or in other words, it is a problem of juicers like the ones disclosed in US 4034664 that the designer has limited freedom of designing the enclosure configuration as a loss in juicer efficiency due to juice re-entering the sieve is to be avoided.
Keeping the design perspective, the design specialist would appreciate that the invention as disclosed in claim 1 solves the problem of realizing a juicer which housing can be designed without having to consider juice re-entering the area enclosed by the sieve.

In a preferred embodiment of the food processor according to the invention, the grating disk is located near the top end of the sieve. Such an arrangement has the advantage that the mixture of pulp and juice created by the grating of the food and which is thrown at the sieve due to the centrifugal forces generated by the rotation of the grating disk hits the sieve near the top end of the sieve. Given the design of the juicer and the sieve, the pulp can only leave the sieve at the sieve bottom end. Thus, when the pulp first hits the sieve near its top end, the pulp has to travel almost the entire distance between the top end and the bottom end of the sieve. This relatively long distance results in a relative long residence time of the pulp on the sieve and thus in a relative long effective sieving time when comparing this configuration with a configuration in which the grating disk is closer to the bottom end of the sieve. This relative long effective sieving time results in a better separation of juice and pulp and therefore to better efficiency of the juicer leading to a higher juice yield.

In a preferred embodiment of the food processor according to the invention, the feeding tube wall has an extension forming an overhang covering the top end of the sieve seen in the feeding direction. An overhang can be designed such that only a minimal amount of material is needed to realize the prevention of juice re-entering the sieve area.

In a preferred embodiment of the food processor according to the invention, the feeding tube wall has a thickening covering the sieve top end when seen in the feeding direction. An advantage of this embodiment is that a thickening is easy to manufacture.

In a preferred embodiment of the food processor according to the invention, the thickening of the feeding tube wall surrounds the sieve top end. Such a thickening is advantageous as it not only prevents juice from re-entering the sieve are in the feeding direction, but also from other directions as well.

In a preferred embodiment of the food processor according to the invention, the thickening of the feeding tube wall is of a bulge like shape. Having a feeding wall thickening of a bulge-like shape is advantageous as this is an easy to clean shape which may require only limited cleaning effort from the user.

In a preferred embodiment of the food processor according to the invention, wherein the feeding tube wall comprises an indentation arranged to receive the sieve top end. This embodiment allows the juice to run down the feeding tube wall without any hindrances, thereby increasing the juice flow speed and reducing the amount of juice sticking to the feeding tube wall.

With reference to the claims it is noted that the invention also relates to all possible combinations of features and/or measures defined in the various claims.

### BRIEF DESCRIPTION OF THE DRAWINGS

A detailed description of the invention is provided below. The description is provided by way of a non-limiting example to be read with reference to the drawings in which:
Figure 1 shows schematically a food processor known from the art having a frusto-conical sieve which extends in diameter towards the bottom of the design seen in a perspective view.
Figure 2 shows schematically a first embodiment of a food processor according to the invention in a cut through view.
Figure 3 shows schematically a second embodiment of a part of a food processor according to the invention in a cut through view.
Figure 4 shows schematically a third embodiment of a part of a food processor according to the invention in a cut through view.

### DETAILED DESCRIPTION OF THE EMBODIMENTS

In the following description similar parts are referred to using the same numbers for various embodiments.

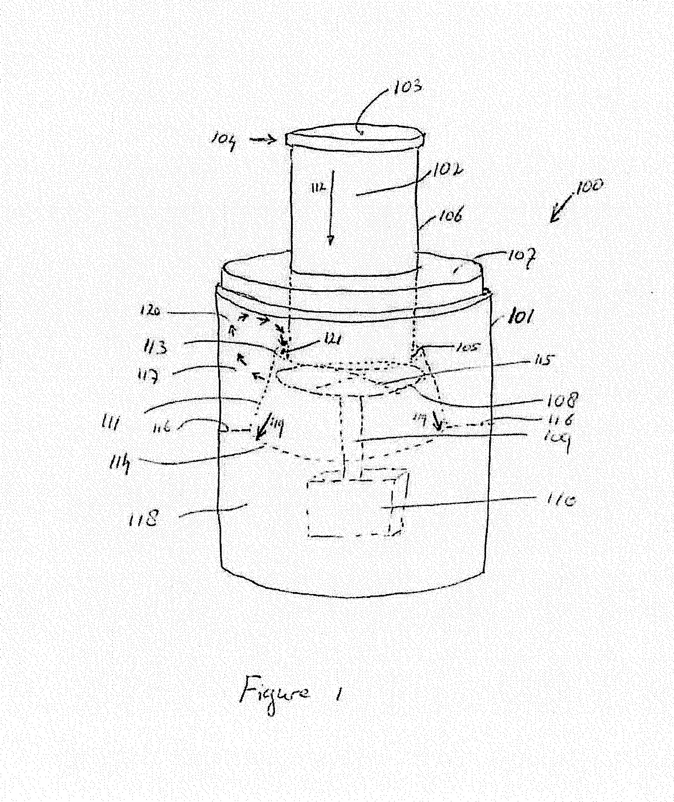

Figure 1 shows a food processor 100 for transforming food and vegetable articles into juice and pulp. This transformation process is usually called juicing, as it will be done hereafter, but other names are possible as well. The food processor 100 comprises a housing 101 having a top part 107. The food processor further comprises a feeding tube 102 which has an opening 103 located at the input end 104 of the feeding tube. Articles to be juiced are introduced to the feeding tube 102 at the input end 104. These articles exit the feeding tube 102 at an exit end 105. During use, the article moves from the input end 104 to the exit end 105 in a feeding direction 112. The feeding tube further comprises a feeding tube wall 106. The feeding tube 102 extends through top part 107 into the interior of the housing 101. Inside this housing a shredding disk 108 is arranged to be rotated by motor 110 through axle 109. The shredding disk 108 is facing the exit end 105 of the feeding tube 102 as commonly known in the art. The shredding disk 108 has a plurality of teeth 115 to perform the shredding of the article. This shredding of an article is also referred to as the grating or juicing of the article. In figure 1 the shredding disk 108 has two lines of shredding teeth. It should be noted that other shredding teeth configurations are possible as well. A sieve 111 is arranged to surround the outer circumference of the shredding disk 108 as well as the exit end 105 of the feeding tube 102. The sieve 111 has a top end 113 which is located at the side of the sieve which surrounds the exit end 105 of the feeding tube 102, as well as a bottom end 114. The sieve 111 is of frusto-conical form whereby the diameter of the top end 113 of sieve 111 is smaller than the diameter of the bottom end 114 of the sieve 111. Sieve 111 is arranged to rotate together with the shredding disk 108 and is coupled to axle 109 through coupling means which are not shown in figure 1.

A user desiring to obtain juice from articles of fruit or vegetable, e.g. apple juice from a set of apples, using the food processor 100, turns on the food processor 100 by using an on-off switch (not shown). After switching on the food processor 100 the motor 110 will force axle 109 into rotation. In turn, the shredding disk 108 and sieve 111 will start to rotate under influence of the axle 109. The user introduces an apple into the opening 103 of the feeding tube 102. The apple will travel in the feeding direction 112 from the input end 104 to the exit end 105 of the feeding tube 102. At the exit end 105 the apple will contact the shredding disk 108. Under the influence of shredding teeth 115 the apple will be shredded transforming the apple into a mixture of juice and pulp. This mixture is forced to the outer rim of the shredding disk 108 under the influence of centrifugal forces which can be understood from textbook physics. The mixture will exit the shredding disk 108 and hit the sieve 111. The juice part of the mixture will pass the sieve 111 while the pulp part of the mixture will travel along the inside of the sieve 111 towards the bottom end 114 of the sieve 111. The pulp will be travelling in a direction having a component 119 directed along the sieve 111 from the top end 113 to the bottom end 114. As is known in the art, the juice fraction of the mixture will be collected in a juice collection area 117 of the housing 101 and the pulp fraction of the mixture will be collected in a pulp collection area 118 of the housing 101. The juice collection area 117 and the pulp collecting area 118 are separated by a separation surface 116. To expedite the shredding of the apple, the user might wish to use a pusher as known in the art. After juicing a first apple the user might continue to juice one or more further apples or another type of fruit or a vegetable. Alternatively, the user might end his or her juicing activities and tap the juice from the juice collecting area 118 using tapping means (which are not shown) into a glass or comparable container (also not shown) and enjoy a tasty drink.

The juice passing the sieve 111 will have rather high speed and is likely to perform a flow pattern 120. In known food processors of this type there is an opening 121 between the top end of the 113 of the sieve and the feeding tube wall 106. Juice following the flow path 120 will re-enter the sieve through opening 121. This juice might not pass the sieve again and end up in the pulp collecting area 118. Thereby, precious juice is wasted and the juice yield of the food processor reduced.

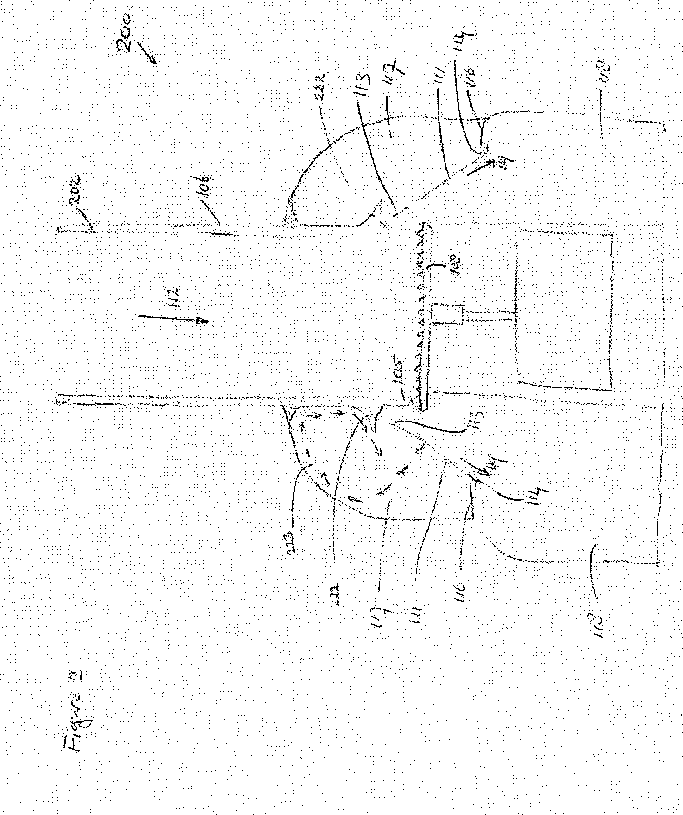

Figure 2 shows an embodiment of the invention solving a problem of the food processor known from the art and shown in figure 1. A cut through of a food processor 200 is shown wherein the re-entering of juice from the juice collecting area 117 into the area enclosed by the sieve 111 is prevented. More specifically, the re-entering of the juice into the area enclosed by the sieve is prevented by an extension 222. Juice passing the sieve 111 can e.g. follow a flow path 223. Extension 222 prevents juice following flow path 223 from re-entering the area enclosed by the sieve 111.

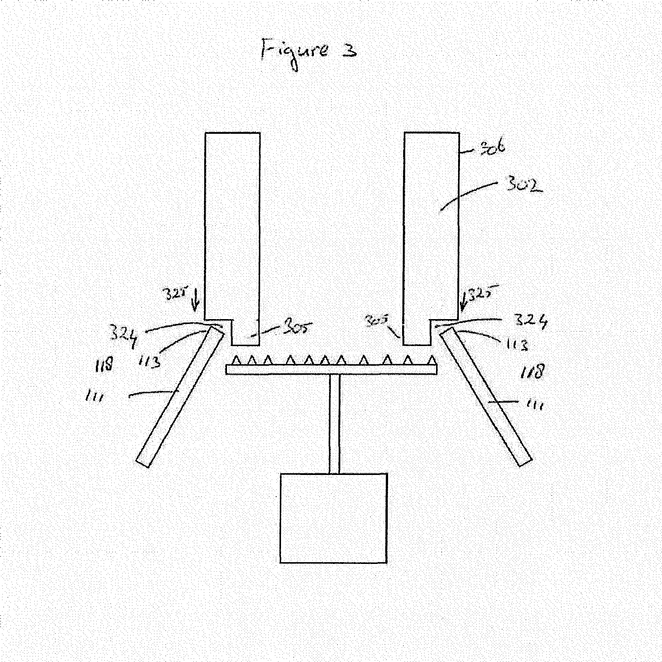

Figure 3 shows a further embodiment of the invention in a schematic cut through. In this embodiment the feeding tube 302 has an exit end 305 of special shape. The feeding tube wall 306 has a lower thickness at its exit end 305 thereby forming an indentation 324 in which the top end 113 of the sieve 111 is received. This arrangement prevents the juice from re-entering the area enclosed by sieve 111 as the juice flow pattern of juice flowing in a pattern similar to that of flow pattern 120 will have a flow direction 325 near the exit end 305 of the feeding tube 302. As the top rim 113 of the sieve 111 is received in the indentation 324 the juice flowing in the direction 325 will flow onto the side of the sieve 111 facing the juice collecting area 118, thereby preventing the re-entering of the juice in the area enclosed by the sieve 111.

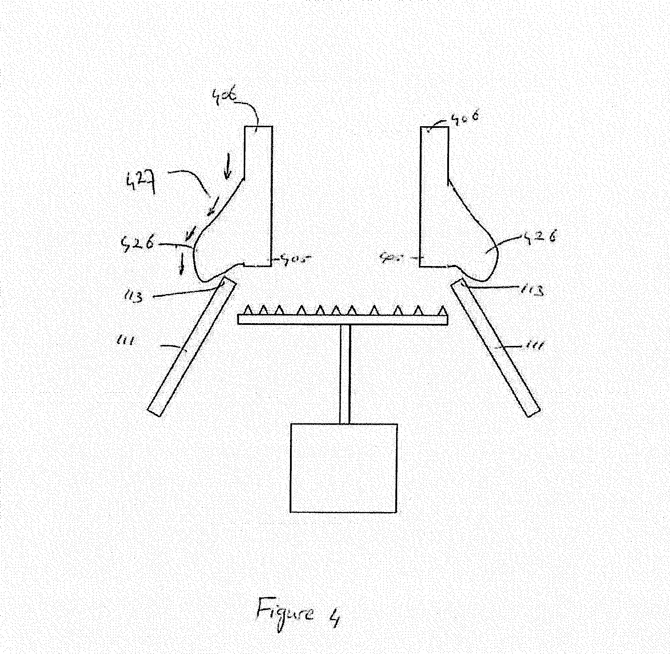

Figure 4 shows a further embodiment of the invention in a schematic cut through. Near the exit end 405 of the feeding tube 406 the feeding tube has a thickening 426. In this embodiment the thickening 426 is of a so-called bulge like form. Other forms of the thickening are possible as well within the scope of the invention. As the thickening 426 encompasses the top end 113 of the sieve 111 it is prevented that juice flowing in the direction of flow path 427 re-enters the area enclosed by the sieve 111.

While the invention has been illustrated and described in detail in the drawings and in the foregoing description, the illustrations and the description are to be considered illustrative or exemplary and not restrictive. The invention is not limited to the disclosed embodiments. It is noted that the food processor according to the invention and all its components can be made by applying processes and materials known per se. In the set of claims and the description the word "comprising" does not exclude other elements and the indefinite article "a" or "an" does not exclude a plurality. Any reference signs in the claims should not be construed as limiting the scope. It is further noted that all possible combinations of features as defined in the set of claims are part of the invention.

## Claims

1. A food processor (200) comprising:
- a grating disk (108) arranged to grate food into juice and pulp, said grating disk being arranged to be rotated during use,
- a feeding tube (202) arranged to feed food to said grating disk (108) in a feeding direction (112), wherein said food exits the feeding tube (202) at an exit end (105), and said feeding tube (202) comprising a feeding tube wall (106),
- a sieve (111) arranged to separate said pulp and juice, wherein said sieve (111) is of a frusto-conical form extending in diameter along said feeding direction (112) from a top end (113) to a bottom end (114), such that the top end (113) has a smaller diameter than the bottom end (114),
wherein said sieve (111) is arranged to be rotated during use, and wherein said sieve (111) surrounds the grating disk (108) and the feeding tube (202) exit end (105), and
wherein, during use, said juice is transported to the outside of the sieve (111), **characterized in that**
the feeding tube wall (106) is shaped to prevent, during use, juice from re-entering the sieve (111) at the top end (113) of the sieve (111).

2. A food processor (200) according to claim 1, wherein the grating disk (108) is located near the top end (113) of the sieve (111).

3. A food processor (200) according to claim 1, wherein the feeding tube wall (206) has an extension (222) forming an overhang covering the top end (113) of the sieve (111) seen in the feeding direction (112).

4. A food processor according to claim 1, wherein the feeding tube wall (406) has a thickening (426) covering the sieve (111) top end (113) when seen in the feeding direction (112).

5. A food processor according to claim 4, wherein said thickening (426) surrounds the sieve (111) top end (113).

6. A food processor according to claim 4 or 5, wherein said thickening (426) is of a bulge-like shape.

7. A food processor according to claim 1, wherein the feeding tube wall (306) comprises an indentation (324) arranged to receive the sieve (111) top end (113).
